# EUROPÄISCHE PATENTSCHRIFT

(11) **EP 0 838 509 B1**
(45) Veröffentlichungstag und Bekanntmachung des Hinweises auf die Patenterteilung: **26.03.2003**
(21) Anmeldenummer: 97118436.1
(22) Anmeldetag: 23.10.1997
(51) Int. Cl.: C09J 133/06

(54) **Pulverförmiger Klebstoff**
Powder-form adhesive
Adhésif pulvérulent

(30) Priorität: 24.10.1996 DE 19644309
(43) Veröffentlichungstag der Anmeldung: 29.04.1998
(73) Patentinhaber: BASF AKTIENGESELLSCHAFT, 67056 Ludwigshafen (DE)
(72) Erfinder: Wildburg, Gerald, Dr., 67071 Ludwigshafen (DE); Wüstefeld, Renate, Dr., 67105 Schifferstadt (DE); Sack, Heinrich, 67454 Hassloch (DE); Fickeisen, Peter, 67246 Dirmstein (DE)
(74) Vertreter: Kinzebach, Werner, Dr.

(56) Entgegenhaltungen:
- EP-A- 0 078 449
- EP-A- 0 522 791

## Beschreibung

Die vorliegende Erfindung betrifft pulverförmige Klebstoffe, die ein redispergierbares Polymerpulver auf Basis eines in Gegenwart eines Schutzkolloid erhältlichen Polymerisats enthalten sowie ihre Verwendung in wäßrigen Klebstofformulierungen.

Gegenwärtig besteht ein großer Bedarf an pulverförmigen Klebstoffen, die durch einfaches Einrühren in Wasser eine leicht zu verarbeitende Klebstofformulierung bilden. Solche pulverförmigen Klebstoffe eignen sich vorteilhafterweise für die Vermarktung im Do-it-yourself Bereich und zeichnen sich durch ihre geringe Menge an Verpackungsmaterial, das oft aus Papier besteht und keinen Kunststoff enthält, geringe Transportkosten aufgrund der fehlenden Lösungsmittel bzw. des fehlenden Wassers und eine einfache Portionierung aus. Ein weiterer Vorteil von Pulvern besteht darin, daß Probleme, die bei der Konservierung wäßriger Formulierung entstehen, entfallen, so daß insgesamt die Haltbarkeit verbessert wird. Zudem sind pulverförmige Klebstofformulierungen im allgemeinen geruchsfrei und froststabil (im Gegensatz zu wäßrigen Formulierungen).

Die EP-A-0134451 beschreibt ein rieselfähiges redispergierbares und unter anderem zur Herstellung von Klebstoffen brauchbares Dispersionspulver, welches jedoch ungeeignet zur Herstellung von Fußbodenklebstoffen ist. Es wird durch Sprühtrocknung einer wäßrigen Dispersion gewonnen, die durch radikalische Emulsionspolymerisation von einem oder mehreren ethylenisch ungesättigten Monomeren in Gegenwart eines Schutzkolloids hergestellt wird. Als Schutzkolloide werden wasserlösliche oder wasserquellbare Stärken, die jeweils höchstens 30 Gew.-% Amylose enthalten, abgebaute, cyanalkylierte, hydroxyalkylierte und/oder carboxymethylierte Stärken sowie wasserlösliche Proteine verwendet.

Einen ähnlichen Offenbarungsgehalt besitzt die EP-B-0134449.

Die EP-A-0536597 beschreibt wäßrige Polymerisatdispersionen, die erhältlich sind durch radikalische Polymerisation ungesättigter Monomere in Anwesenheit eines durch Hydrolyse in wäßriger Phase erhältlichen Stärkeabbauprodukts, Verfahren zu ihrer Herstellung durch Emulsionspolymerisation und ihre Verwendung als Klebstoffe, Bindemittel für Formkörper auf Basis feinteiliger organischer und/oder anorganischer Materialien, Bindemittel für Schleifartikel auf Basis feinteiliger Schleifpartikel, Bindemittel für Teppichrückenbeschichtungen und Papierstreichmassen, Schlichtemittel für Fasern und zur Herstellung von Überzügen. Auch diese Dispersionen sowie wäßrige Formulierungen der beschriebenen Pulver eignen sich nicht als Fußbodenklebstoffe.

Die EP-A-0078449 betrifft ein Verfahren zur Herstellung von blockfesten, in Wasser redispergierbaren Polymerisat-Pulvern durch Versprühen von wässrigen Polymerisat-Dispersionen, denen ein Vinylpyrrolidon/Vinylacetatlopolymerisat und/oder ein wasserlöslliches Alkali- und/oder Erdalkalisalz eines Naphthalinsulfonsäure-Formaldehyd-Kondensationsproduktes zugesetzt wird. Der vorliegenden Erfindung liegt die Aufgabe zugrunde, neue pulverförmige Klebstoffe für die Anwendung als Fußbodenklebstoffe zur Verfügung zu stellen. Insbesondere soll der Klebstoff gutes Naßanzugs- und Trockenanfaßvermögen besitzen. Außerdem soll das Klebstoffpulver gut in Wasser dispergierbar sein.

Überraschenderweise wurde nun gefunden, daß die Aufgabe gelöst wird, wenn man in pulverförmigen Klebstoffen redispergierbare Polymerpulver, auf Basis eines in Gegenwart eines Schutzkolloids erhältlichen Polymerisats, in Kombination mit einem alkalischen Zusatz einsetzt.

Gegenstand der Erfindung ist daher ein pulverförmiger Klebstoff, enthaltend:
a) 5,0 bis 98,9 Gew.-% eines redispergierbaren Polymerpulvers, das erhältlich ist durch radikalische Copolymerisation einer Mischung M, die 50 bis 99,9 Gew.-% mindestens eines ethylenisch ungesättigten Monomers und 0,1 bis 15 Gew.-% mindestens eines wasserlöslichen, säuregruppenhaltigen Comonomers umfasst, zu einem Polymerisat P mit einer Glasübergangstemperatur ≤ 20°C, nach dem Verfahren der radikalischen wässrigen Emulsionspolymerisation in Gegenwart mindestens einer verzukkerten Stärke mit einem gewichtsmittleren Molekulargewicht von 2500 bis 25000 als Schutzkolloid sowie gegebenenfalls weiterer Zusatzstoffe, unter Erhalt einer wässrigen Polymerisatdispersion und Sprühtrocknen der Dispersion bei einem pH-Wert von 1 bis 7,
b) 1 bis 94,9 Gew.-% mindestens eines Füllstoffs,
c) 0,1 bis 10 Gew.-% mindestens eines alkalischen Zusatzes,
d) 0 bis 10 Gew.-% mindestens eines Emulgators,
e) 0 bis 30 Gew.-% weiterer Zusätze.

### Komponente a):

Geeignete wäßrige Polymerisatdispersionen sind z.B. in der EP-A-0 536 597 beschrieben.

Die zur Herstellung der Polymerisate P verwendete Monomermischung M enthält 50 bis 99,9 Gew.-%, bevorzugt 60 bis 99 Gew.-%, insbesondere bevorzugt 70 bis 95 Gew.-% mindestens eines radikalisch polymerisierbaren, ethylenisch ungesättigten Monomeren.

Geeignete Monomere sind C₂-C₆-Monoolefine, wie z.B. Ethylen, Vinylaromaten, wie z.B. Styrol, α-Methylstyrol, o-Chlorstyrol oder Vinyltoluol, Vinyl- und Vinylidenhalogenide, wie z.B. Vinylchlorid und Vinylidenchlorid, Ester von Vinylalkohol und Monocarbonsäuren mit 1 bis 20 Kohlenstoffatomen, wie z.B. Vinylformiat, Vinylacetat, Vinylpropionat, Vinyl-n-butyrat, Vinyllaurat, und Vinylstearat, Ester α,β-monoethylenisch ungesättigter Mono- und Dicarbonsäuren, mit Alkanolen mit bevorzugt 1 bis 12 Kohlenstoffatomen, besonders bevorzugt 1 bis 8 Kohlenstoffatomen und insbesondere 1 bis 4 Kohlenstoffatomen, wie z.B. Ester der Acrylsäureund/oder Methacrylsäure mit Methanol, Ethanol, n-Propanol, Isopropanol, n-Butanol, Isobutanol oder 2-Ethylhexanol, Maleinsäuredimethylester oder Maleinsäure-n-butylester, ethylenisch ungesättigte Nitrile, wie z.B. Acrylnitril und Methacrylnitril sowie nicht aromatische Kohlenwasserstoffe mit 2 bis 8 Kohlenstoffatomen und mindestens zwei olefinischen Doppelbindungen, wie z.B. Butadien, Isopren und Chloropren.

Die Monomermischung M enthält weiterhin 0,1 bis 15 Gew.-%, bevorzugt 1 bis 10 Gew.-%, insbesondere bevorzugt 3 bis 5 Gew.-% mindestens einer α,β-monoethylenisch ungesättigten Mono- und/oder Dicarbonsäure. Geeignete Säuren sind z.B. Acrylsäure, Methacrylsäure, Maleinsäure, Fumarsäure, Itaconsäure und Crotonsäure sowie deren Mischungen.

Die Monomermischung M kann weiterhin gegebenenfalls 0 bis 40 Gew.-%, bevorzugt 0 bis 20 Gew.-%, insbesondere bevorzugt 0,2 bis 10 Gew.-% weitere Monomere enthalten. Geeignete weitere Monomere sind beispielsweise N-alkylierte Acrylamide und Methacrylamide, Vinylsulfonsäuren und ihre wasserlöslichen Salze, N-Vinylpyrrolidon, vernetzende Monomere, die zusätzlich zu ihrer ethylenisch ungesättigten Doppelbindung eine Epoxy-, Hydroxy-, N-Methylol-, Carbonylfunktion oder zwei nicht konjugierte ethylenisch ungesättigte Doppelbindungen aufweisen. Beispiele für vernetzende Monomere sind Hydroxyalkylacrylate, Hydroxyalkylmethacrylate, N-hydroxyalkylierte Acrylamide und Methacrylamide, wie z.B. N-Methylolacrylamid und N-Methylolmethacrylamid, sowie Monomere mit mindestens zwei Vinylresten, mindestens zwei Vinylidenresten oder mindestens zwei Alkenylresten. Dazu zählen z.B. Alkylenglykoldiacrylate, Alkylenglykoldimethacrylate, wie z.B. Ethylenglykoldiacrylat, 1,3-Butylenglykoldiacrylat, 1,4-Butylenglykoldiacrylat, Propylenglykoldiacrylat, Divinylbenzol, Vinylmethacrylat, Vinylacrylat, Allylmethacrylat, Allylacrylat, Diallylmaleat, Diallylfumarat oder Methylbisacrylamid.

Nach einer bevorzugten Ausführungsform enthält die Mischung M radikalisch polymerisierbare, ethylenisch ungesättigte Monomere aus den vier folgenden Klassen in den vorgenannten bevorzugten Mengenverhältnissen:
- Klasse I
   Ester der Acrylsäure und/oder der Methacrylsäure mit Alkanolen mit 1 bis 12 Kohlenstoffatomen und/oder Styrol;
- Klasse II
   Styrol und/oder konjugierte Diene, bevorzugt 1,3-Butadien;
- Klasse III
   Vinylhalogenide und/oder Vinylidenhalogenide, bevorzugt Vinylchlorid und/oder Vinylidenchlorid;
- Klasse IV
   Vinylester und/oder aliphatische Kohlenwasserstoffe mit 1 oder 2 Doppelbindungen und 2 bis 8 Kohlenstoffatomen und/oder Ester der Acrylsäure und/oder der Methacrylsäure.

Besonders bevorzugt sind Mischungen M mit Monomeren der Klasse I.

Gemäß einer insbesonders bevorzugten Ausführungsform enthält die Mischung M dann als ethylenisch ungesättigte Monomere Styrol, Ethylacrylat, n-Butylacrylat, Ethylhexylacrylat und Methylmethacrylat oder deren Mischungen und als wasserlösliche säuregruppenhaltige Comonomere Acrylsäure, Methacrylsäure oder deren Mischungen.

Die Glasübergangstemperatur des Polymerisats P ist bevorzugt ≤ 0°C, besonders bevorzugt ≤ -10°C, insbesondere bevorzugt ≤ -20°C, und speziell ≤ -30°C. Die Glasübergangstemperatur des Polymeren kann nach der Methode der Differentialthermoanalyse (DTA) oder differential scanning calorimetry (DSC, wie in ASTM 3418/82 beschrieben) bestimmt werden:

Die Copolymerisation der vorbeschriebenen Mischung M zu einem Polymerisat P erfolgt in Gegenwart mindestens eines Schutzkolloids. Geeignete Schutzkolloide sind z.B. Polyvinylalkohole und teilverseifte Polyvinylacetate, Polyacrylate, Polyvinylpyrrolidon, Cellulose und Cellulosederivate, wie z.B. Methylcellulose, Hydroxyethylcellulose, Carboxymethylcellulose, Stärke und Stärkederivate, wie z.B. Cyanalkyletherstärke, Hydroxyalkyletherstärke, Carboxymethylstärke etc. Eine ausführliche Beschreibung von Schutzkolloiden findet sich in Houben-Weyl, Methoden der Organischen Chemie, Band XIV/1, Makromolekulare Stoffe, Georg-Thieme-Verlag, Stuttgart, 1961, S. 411-420.

Dabei werden erfindungsgemäß Stärkeabbauprodukte mit einem gewichtsmittleren Molekulargewicht von 2500 bis 25000 als Schutzkolloide verwendet. Die Stärkeabbauprodukte sind aus Stärke erhältlich durch Hydrolyse in wäßriger Phase, oder durch thermischen Abbau (Röstdextrine). Durch Hydrolyse in wäßriger Phase erhältliche Stärkeabbauprodukte werden im Unterschied zu den Röstdextrinen üblicherweise als verzuckerte Stärken bezeichnet und sind im Handel erhältlich (z.B. die C*PUR Produkte 01906, 01908, 01910, 01912, 01915, 01921, 01924, 01932 oder 01934 der Cerestar Deutschland GmbH, Krefeld).

Derartige verzuckerte Stärken sind von den Röstdextrinen u.a. dadurch chemisch verschieden, daß bei einem hydrolytischen Abbau in wäßrigem Medium (üblicherweise Suspensionen oder Lösungen), der in der Regel bei Feststoffgehalten von 10 bis 30 Gew.-%, sowie vorzugsweise säure- oder enzymkatalysiert vorgenommen wird, die Möglichkeit der Rekombination und Verzweigung im wesentlichen nicht gegeben ist, was sich z.B. auch in anderen Molekulargewichtsverteilungen äußert. So haben sich verzuckerte Stärken, die eine bimodale Molekulargewichtsverteilung aufweisen, erfindungsgemäß als besonders vorteilhaft erwiesen.

Die Herstellung verzuckerter Stärken ist allgemein bekannt und u.a. in Günther Tegge, Stärke und Stärkederivate, Behr's Verlag, Hamburg 1984, S. 173 und S. 220 ff sowie in der EP-A 441 197 beschrieben. Vorzugsweise handelt es sich bei den erfindungsgemäß zu verwendenden verzuckerten Stärken um solche, deren gewichtsmittleres Molekulargewicht M_{w} im Bereich von 4000 bis 16000, besonders bevorzugt im Bereich von 6500 bis 13000 liegt.

Die erfindungsgemäß zu verwendenden Stärken sind normalerweise bei Raumtemperatur in Wasser vollständig löslich, wobei die Löslichkeitsgrenze in der Regel oberhalb von 50 Gew.-% liegt, was sich für die Herstellung der erfindungsgemäßen wäßrigen Polymerisatdispersionen als besonders vorteilhaft erweist.

Bevorzugt werden verzuckerte Stärken mit einer Unheitlichkeit U (definiert als Verhältnis von gewichtsmittlerem Molekulargewicht M_{w} zu zahlenmittlerem Molekulargewicht Mₙ im Bereich von 6 bis 12 verwendet. Besonders bevorzugt beträgt U 7 bis 11 und insbesondere 8 bis 10.

Ferner ist es von Vorteil, wenn der Gewichtsanteil der erfindungsgemäß zu verwendenden verzuckerten Stärken, der ein Molekulargewicht unterhalb von 1000 aufweist, wenigstens 10 Gew.-%, jedoch nicht mehr als 70 Gew.-% beträgt. Besonders bevorzugt liegt dieser Gewichtsanteil im Bereich von 20 bis 40 Gew.-%.

Es ist weiterhin vorteilhaft, verzuckerte Stärken zu verwenden, deren Dextroseequivalent DE 5 bis 40, vorzugsweise 10 bis 30 und besonders bevorzugt 10 bis 20 beträgt. Der DE-Wert charakterisiert das Reduktionsvermögen bezogen auf das Reduktionsvermögen von wasserfreier Dextrose und wird nach DIN 10308 Ausgabe 5.71, des Normenausschusses Lebensmittel und landwirtschaftliche Produkte bestimmt (vgl. auch Günther Tegge, Stärke und Stärkederivate, Behr's Verlag, Hamburg 1984, S. 305).

Des weiteren werden für die erfindungsgemäßen Klebstoffe besonders geeignete wäßrige Polymerisatdispersionen dann erhalten, wenn man verzuckerte Stärken verwendet, deren 40 gew.-%igen wäßrigen Lösungen bei 25°C und einem Schergefälle von 75 s⁻¹ eine nach DIN 53 019 bestimmte dynamische Viskosität η⁴⁰ [Pa·s] von 0,01 bis 0,06, vorzugsweise von 0,015 bis 0,04 und besonders bevorzugt von 0,02 bis 0,035 aufweisen.

Sofern nichts anderes erwähnt ist, beruhen die Angaben zum Molekulargewicht der verzuckerten Stärken auf Bestimmungen mittels Gelpermeationschromatographie, wobei unter folgenden Bedingungen chromatographiert wurde:

| | |
|---|---|
| Säulen | 3 Stück 7,5 x 600 mm Stahl gefüllt mit TSK-Gel G 2000 PW; G 3000 PW und G 4000 Pw. Porenw. 5 µm |
| Eluent | Wasser dest. |
| Temp. | RT (Raumtemperatur) |
| Detektion | Differentialfraktometer (z.B. ERC 7511) |
| Fluss | 0,8 ml/min. Pumpe: (z.B. ERC 64.00) |
| Injectv. | 20 µl Ventil: (z.B. VICI 6-Wege-Ventil) |
| Auswertung | Bruker Chromstar GPC-Software |
| Eichung | Die Eichung erfolgte im niedermolekularen Bereich mit Glucose, Raffinose, Maltose und Maltopentose. Für den höhermolekularen Bereich werden Pullulan-Standards mit einer Polydispersität < 1,2 verwendet. |

Als Ausgangsstärken zur Herstellung der erfindungsgemäß zu verwendenden verzuckerten Stärken sind prinzipiell alle nativen Stärken wie Getreidestärken (z.B. Mais, Weizen, Reis oder Hirse), Knollen- und Wurzelstärken (z.B. Kartoffeln, Tapiokawurzeln oder Arrowroot) oder Sagostärken geeignet.

Ein wesentlicher Vorzug der erfindungsgemäß zu verwendenden verzuckerten Stärken ist, daß es abgesehen von der partiellen Hydrolyse der Ausgangsstärke zu ihrer Herstellung, keiner weiteren chemischen Modifizierung bedarf. Gewünschtenfalls können aber auch z.B. durch Veretherung oder Veresterung chemisch modifizierte Stärken verwendet werden. Diese chemische Modifizierung kann auch bereits an der Ausgangsstärke vor deren Abbau durchgeführt worden sein. Veresterungen sind sowohl mit anorganischen als auch mit organischen Säuren, deren Anhydriden oder Chloriden, möglich. Besonders geeignet sind phosphatierte und acetylierte abgebaute Stärken. Die übliche Methode zur Veretherung ist die Behandlung mit organischen Halogenverbindungen, Epoxiden oder Sulfaten in wäßriger alkalischer Lösung. Besonders geeignete Ether sind Alkylether, Hydroxyalkylether, Carboxyalkylether und Allylether. Ferner sind auch Umsetzungsprodukte mit 2,3-Epoxipropyltrimethylammoniumchlorid geeignet. Vorzugsweise werden chemisch nicht modifizierte verzuckerte Stärken bei der Polymerisation der Mischung M verwendet. Die Mischung zur Herstellung des redispergierbaren Polymerpulvers a) enthält das Stärkeabbauprodukt in einer Menge von 5 bis 40 Gew.-%, bevorzugt 10 bis 30 Gew.-%, insbesondere bevorzugt 15 bis 25 Gew.-%, bezogen auf das Gewicht der polymerisierten Monomere.

Die erfindungsgemäß zu verwendenden verzuckerten Stärken können sowohl als einzige Dispergiermittel als auch im Gemisch mit anderen grenzflächenaktiven Substanzen als Zusatzstoffen angewendet werden.

Geeignete weitere grenzflächenaktive Zusatzstoffe sind die zuvor genannten üblicherweise bei der Emulsionspolymerisation als Dispergiermittel eingesetzten Schutzkolloide und Emulgatoren, wie sie z.B. in Houben-Weyl, Methoden der organischen Chemie, Band XIV/1, Makromolekulare Stoffe, Georg-Thieme-Verlag, Stuttgart, 1961, S. 411 bis 420 beschrieben sind. Als Dispergiermittel sind sowohl anionische, kationische als auch nichtionische Emulgatoren geeignet. Vorzugsweise werden Emulgatoren eingesetzt, deren relative Molekulargewichte im Unterschied zu den Schutzkolloiden üblicherweise unter 2000 liegen. Werden Gemische grenzflächenaktiver Substanzen verwendet, so müssen die Einzelkomponenten miteinander verträglich sein. Vorzugsweise werden anionische und nichtionische Emulgatoren als begleitende grenzflächenaktive Substanzen verwendet. Geeignete Emulgatoren sind in der EP-A-0 536 597 beschrieben.

Erfindungsgemäß wird die Mischung M zur Herstellung der wäßrigen Polymerisatdispersionen nach dem Verfahren der radikalischen wäßrigen Emulsionspolymerisation in Anwesenheit der verzuckerten Stärken in üblicher Weise polymerisiert. Die Emulsionspolymerisationstemperatur beträgt in der Regel 30 bis 95, vorzugsweise 75 bis 90°C. Das Polymerisationsmedium kann sowohl nur aus Wasser, als auch aus Mischungen aus Wasser und wassermischbaren Flüssigkeiten, wie Methanol, bestehen. Vorzugsweise wird nur Wasser verwendet. Die Emulsionspolymerisation kann sowohl als Batchprozeß als auch in Form eines Zulaufverfahrens, einschließlich Stufen- und Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. In anwendungstechnisch vorteilhafter Weise enthält die Vorlage und/oder der Monomerenzulauf geringe Mengen an Emulgatoren, bezogen auf die Gesamtmenge der zu polymerisierenden Monomeren in der Regel weniger als 0,5 Gew.-%, um die Oberflächenspannung des Dispergiermediums zu reduzieren und so das Einrühren zu erleichtern. Häufig werden die Monomeren daher in mit diesen Hilfsemulgatoren voremulgierter Weise der Polymerisationszone zugeführt. Aufgrund der hohen Löslichkeit der erfindungsgemäß zu verwendenden verzuckerten Stärken in Wasser, läßt sich das Zulaufverfahren dadurch besonders einfach gestalten, daß man die Gesamtmenge der zu verwendenden verzuckerten Stärke in einer wäßrigen Vorlage in gelöster Form vorlegt; ein Vorgelatinisieren ist nicht erforderlich. Die bei der partiellen Hydrolyse der Ausgangsstärke anfallende wäßrige Lösung kann, nachdem die Hydrolyse gestoppt wurde, z.B. durch Neutralisation der katalytisch wirkenden Säure und Abkühlen, unmittelbar für die wäßrige Emulsionspolymerisation weiterverwendet werden. Ein vorheriges Isolieren der verzuckerten Stärke, z.B. durch Sprühtrocknen, ist nicht erforderlich.

Als Polymerisationsinitiatoren können sämtliche unter den Polymerisationsbedingungen in Radikale zerfallende Verbindungen eingesetzt werden, z.B. Peroxide, Hydroperoxide, Wasserstoffperoxid, Persulfate, Azoverbindungen und die sogenannten Redoxkatalysatoren. Bevorzugt ist der Einsatz von wasserlöslichen Initiatoren. In manchen Fällen ist es vorteilhaft, Mischungen verschiedener Polymerisationsinitiatoren zu verwenden, z.B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Ebenfalls als Initiatoren geeignete organische Peroxide sind in der EP-A-0 536 597 beschrieben. Die genannten Polymerisationsinitiatoren werden in üblichen Mengen eingesetzt, z.B. in Mengen von 0,01 bis 5, vorzugsweise 0,1 bis 2,0 Gew.-%, bezogen auf die zu polymerisierenden Monomere. Als Initiatoren kommen außerdem Redoxkatalysatoren in Betracht. Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetall-hydrogensulfit, -sulfit, -thiosulfat, -hyposulfit, -pyrosulfit oder -sulfid, Metallsalze, wie Eisen-II-ionen oder Silberionen oder Natriumhydroxymethylsulfoxylat.

Bei den Redoxkatalysatoren ist es vorteilhaft, die verzuckerten Stärken als reduzierende Komponente zu verwenden. In der Regel beträgt die Menge der eingesetzten radikalischen Initiatorsysteme, bezogen auf die Gesamtmenge der zu polymerisierenden Monomeren 0,1 bis 2 Gew.-%. Besonders bevorzugt werden Ammonium- und/oder Alkalimetallperoxodisulfate für sich oder als Bestandteil kombinierter Systeme als Initiatoren eingesetzt. Besonders bevorzugt wird Natriumperoxodisulfat verwendet.

Das radikalische Initiatorsystem kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Die radikalische wäßrige Emulsionspolymerisation erfolgt in der Regel bei Normaldruck, sie kann aber auch unter erhöhtem oder reduziertem Druck erfolgen.

Gegebenenfalls kann die Monomermischung M in Gegenwart von üblichen Polymerisationsreglern, wie Mercaptanen, z.B. tert.-Dodecylmercaptan, polymerisiert werden. Diese werden dann in einer Menge von 0,01 bis 5 Gew.-%, bezogen auf die Gesamtmenge der Mischung M verwendet.

Die erfindungsgemäßen wäßrigen Polymerisatdispersionen werden in der Regel mit Gesamtfeststoffgehalten von 15 bis 70 Gew.-% hergestellt.

Zur Herstellung der erfindungsgemäß als Komponente a) verwendeten redispergierbaren Polymerpulver werden die zuvor beschriebenen wäßrigen Polymerisatdispersionen getrocknet. Die Trocknung kann in einer dem Fachmann bekannten Weise, wie z.B. Sprühtrocknung, Walzentrocknung oder Saugfiltertrocknung erfolgen. Bevorzugt ist die Sprühtrocknung.

Die Dispersionen können sowohl unverdünnt als auch mit Wasser verdünnt sprühgetrocknet werden, wobei der Feststoffgehalt der wäßrigen Polymerdispersion zur Sprühtrocknung (gemessen nach DIN 53 189) bevorzugt 25 bis 60%, insbesondere bevorzugt 40 bis 50% beträgt.

Vorzugsweise liegt der pH-Wert der Dispersionen zur Sprühtrocknung im neutralen oder sauren Bereich, z.B. bei Werten von 1 bis 7, bevorzugt 2 bis 6, insbesondere bevorzugt 3 bis 6. Gewünschtenfalls kann der pH-Wert der Dispersionen vor der Sprühtrocknung durch Säuren oder Basen, wie z.B. Alkalihydroxide, Alkalicarbonate, Alkaliphosphate, Alkaliacetate, Ammoniak, HCl, etc. eingestellt werden. Es wurde gefunden, daß sich die wäßrigen Polymerisatdispersionen nicht zu blockfesten Pulvern sprühtrocknen lassen, wenn alkalische Zusätze (Komponente c)) schon vor der Sprühtrocknung den wäßrigen Dispersionen zugesetzt werden.

Vorteilhafterweise ist eine Verwendung von Sprühhilfsmitteln zur Herstellung der Komponente a) nicht erforderlich, insbesondere dann, wenn der Gehalt der wäßrigen Polymerisatdispersionen an den vorgenannten verzuckerten Stärken, bezogen auf die Gesamtmenge der polymerisierten Monomere, oberhalb von 10 Gew.-% liegt. Gewünschtenfalls können jedoch auch bekannte Sprühhilfsmittel verwendet werden. Geeignete Sprühhilfsmittel sind z.B. Polyvinylalkohole, Polyvinylpyrrolidone, Ligninsulfonate, wasserlösliche Kondensationsprodukte aus Melamin und Formaldehyd, Kondensationsprodukte aus Naphthalinsulfonsäure oder Phenolsulfonsäure und Formaldehyd, Polyacrylsäure, Polyacrylamide, feinteilige Silikate oder deren Gemische.

Verfahren zur Sprühtrocknung von Polymerisatdispersionen sind dem Fachmann bekannt. Allgemein wird bei einer Sprühtrocknung so vorgegangen, daß eine wäßrige Polymerisatdispersion in einem Warmluftstrom mittels Ein- oder Mehrstoffdüsen oder über eine rotierende Scheibe versprüht werden. Die Abscheidung der Polymerisatpulver erfolgt normalerweise unter Verwendung von Zyklonen oder Filterabscheidern. Die versprühte wäßrige Polymerisatdispersion und der Warmluftstrom werden vorzugsweise parallel geführt.

### Komponente b) :

Die erfindungsgemäßen pulverförmigen Klebstoffe enthalten mindestens einen Füllstoff b) in einer Menge von 1 bis 94,9 Gew.-%. Geeignete Füllstoffe sind z.B. Kreide, Calcit, Dolomit, Quarzmehl Titandioxid, Aluminiumsilikat, Talkum, Glimmer, Kieselgur, Gips, Magnesit, Schiefermehl, Bariumsulfat, harte Polymerisate oder deren Mischungen. Bevorzugt werden feingemahlene, oberflächenaktive oder gefällte Kreiden mit einem mittleren Teilchendurchmesser von 2 bis 50 µm, Quarzmehl mit einem mittleren Teilchendurchmesser von 3 bis 50 µm sowie die in der EP-B-494 219 beschriebenen harten Polymerisate.

Die Komponente b) ist in dem pulverförmigen Klebstoff vorzugsweise in einer Menge von 40 bis 70 Gew.-% enthalten.

### Komponente c):

Die erfindungsgemäßen pulverförmigen Klebstoffe enthalten weiterhin mindestens einen alkalischen Zusatz c). Geeignete alkalische Zusätze c) sind beispielsweise Alkalihydroxide, wie z.B. NaOH, KOH, Erdalkalihydroxide, wie z.B. Mg(OH)₂, Ca(OH)₂, Sr(OH)₂, Ba(OH)₂, Erdalkalioxide, wie z.B. MgO und CaO, Alkalicarbonate, wie z.B. Na₂CO₃ und K₂CO₃, Alkalihydrogencarbonate, wie z.B. NaHCO₃ und KHCO₃ sowie Silikate, insbesondere Wasserglas.

Überraschenderweise wurde gefunden, daß die Komponente c) den aus den erfindungsgemäßen pulverförmigen Klebstoffen durch Anrühren mit Wasser hergestellten wäßrigen Formulierungen eine sehr gute Klebewirkung verleiht. Die pulverförmigen Klebstoffe enthalten die Komponente c) in einer Menge, daß nach dem Anrühren mit Wasser der pH-Wert der Formulierungen > 6, bevorzugt > 7, insbesondere bevorzugt > 8 ist. Diese Menge beträgt im allgemeinen 0,1 bis 10 Gew.-%, insbesondere 1 bis 6 Gew.-%.

### Komponente d):

Die erfindungsgemäßen pulverförmigen Klebstoffe können bis zu 10 Gew.-% eines Emulgators d), vorzugsweise in Pulverform, enthalten. Geeignete Emulgatoren sind die üblichen Netz- und Dispergiermittel, wie z.B. Alkalisalze von längerkettigen Fettsäuren, Alkylsulfate, Alkylsulfonate, alkylierte Arylsulfonate, alkoxylierte, insbesondere ethoxylierte und propoxylierte Fettalkohole, Ligninsulfonate, Phenolsulfonsäure-Formaldehyd-Kondensate, Naphthalinsulfonsäure-Formaldehyd-Kondensate, etc.

Bevorzugt werden ethoxylierte nichtionische Tenside der Emulan®-Marken der BASF AG verwendet.

### Komponente e):

Geeignete weitere Zusätze der erfindungsgemäßen Klebstoffe sind z.B. Stärke und die vorgenannten Stärkederivate, Cellulose und die vorgenannten Cellulosederivate sowie die ebenfalls zuvor beschriebenen Sprühhilfsmittel. Sie können in einer Menge bis zu 30 Gew.-% enthalten sein. Des weiteren geeignete Zusätze sind Verdicker, wie z.B. Homo- und Copolymerisate auf Basis von Polyacrylsäuresalzen und von Polyvinylpyrrolidon, wie z.B. die Collacral®-Marke der BASF sowie Vinylpyrrolidon-Vinylacetat-Copolymere wie z.B. die Luviskol®-Marken der BASF. Weiterhin geeignete Verdicker sind z.B. in wäßrigen Alkalien lösliche Polyacrylate, wie z.B. die Latekoll®-Marken der BASF.

Weiterhin geeignete Zusätze e) sind z.B. Konservierungsmittel, Entschäumer, Farbstoffe, Pigmente, Pigmentverteiler, z.B. Pigmentverteiler N auf Polyacrylat-Basis der BASF AG, etc. Die erfindungsgemäßen Klebstoffe können einen oder mehrere der vorgenannten Zusätze in einer Gesamtmenge von bis zu 30 Gew.-% enthalten.

Die erfindungsgemäßen pulverförmigen Klebstoffe werden in einem zweistufigen Verfahren hergestellt, wobei man in einer ersten Stufe A) eine wäßrige Polymerdispersion trocknet, vorzugsweise durch Sprühtrocknen, wie bereits oben bei Komponente a) beschrieben.

Das in der ersten Verfahrensstufe A) erhaltene redispergierbare Polymerpulver a) wird anschließend in einer zweiten Verfahrensstufe B) mit den vorbeschriebenen Komponenten b), c) und gegebenenfalls d) und/oder e) gemischt, wobei übliche Mischvorrichtungen verwendet werden.

Die erhaltenen pulverförmigen Klebstoffe sind aufgrund der in ihnen enthaltenen redispergierbaren Polymerpulver a) leicht zu einer wäßrigen Klebstofformulierung anrührbar. Die Klebstoffe sind ebenso wie die Komponente a) blockfest, wobei vorteilhafterweise auch nach längerer Lagerung kein Verbackungen der Pulver auftreten. Ebenfalls vorteilhaft wird die Blockfestigkeit im allgemeinen ohne den Zusatz von Antiblockmitteln erreicht. Überraschenderweise werden blockfeste Klebstoffpulver nur dann erhalten, wenn die Sprühtrocknung im sauren bis neutralen pH-Bereich, vorzugsweise im sauren pH-Bereich erfolgt.

Zur Herstellung einer wäßrigen Klebstofformulierung wird der erfindungsgemäße pulverförmige Klebstoff unter Rühren mit Wasser gemischt. Der Feststoffgehalt der wäßrigen Klebstofformulierungen liegt bei 40 bis 99 Gew.-%, bevorzugt bei 40 bis 95 Gew.-% und insbesondere bevorzugt bei 50 bis 90 Gew.-%, bezogen auf die Gesamtmenge der Formulierung.

Überraschenderweise ergeben nur pulverförmige Klebstoffe mit alkalischen Zusätzen c) wäßrige Klebstofformulierungen mit einer guten Klebewirkung.

Des weiteren ist überraschend, daß die erfindungsgemäßen wäßrigen Klebstofformulierungen bei der Anwendung als Klebstoff für Teppichböden Verklebungen bilden, die schamponierfest sind, obwohl der zugrundeliegende pulverförmige Klebstoff gut redispergierbar ist und hohe Mengen wasserlöslicher Komponenten, wie z.B. abgebaute Stärken, enthält.

Die wäßrigen Klebstofformulierungen eignen sich besonders als Klebstoffe zum Verkleben von Substraten aus Kunststoff, Holz, Keramik, Metall, sowie von Textilien aus gewebten oder ungewebten Fasern.

Insbesondere eignen sich die wäßrigen Formulierungen als Fußbodenkleber für Bodenbeläge, wie z.B. Beläge aus Polyvinylchlorid (PVC), in Ausführungen als Ein- oder Mehrschichtbeläge, Schaumstoffbeläge mit Textilunterseite, z.B. aus Jute, für Polyestervliese, Gummibeläge, Textilbeläge mit unterschiedlicher Rückenausstattung, wie z.B. Polyurethanschaum, Styrolbutadienschaum, textiler Zweitrücken sowie als Kleber für Nadelvliesbodenbeläge, Polyolefinbeläge oder Linoleumbeläge auf Untergründen wie Holz, Estrich, Beton, keramischen Fliesen, Metalluntergründen oder ähnlichem.

Der Kleber kann auf übliche Weise z.B. mit einer Scherrakel auf den Untergrund aufgetragen werden. Nach dem üblichen Ablüften wird der Bodenbelag eingelegt. Die erfindungsgemäße Klebstofformulierung weist gute anwendungstechnische Eigenschaften, wie Naßanzugsvermögen und Trockenanfaßvermögen auf.

Die Erfindung wird anhand der folgenden nicht einschränkenden Beispiele erläutert.

### Beispiele

### a) Herstellung der Dispersionen:

### Beispiel 1 (erfindungsgemäß)

Ein Gemisch aus 424,15 g Wasser und 140 g Maltodextrin C*PUR 01915 (durch Hydrolyse in wäßriger Phase erhältliches Stärkeabbauprodukt der Fa. Cerestar Deutschland GmbH mit einer bimodalen Molekulargewichtsverteilung, einem gewichtsmittleren Molekulargewicht M_{w} von 6680 bis 8350, einer Uneinheitlichkeit U (M_{w}/Mₙ) von 6,8 bis 8,4, einem Molekulargewicht unterhalb von 1000 von 32,9 bis 34,7 Gew.-%, einem Dextroseäquivalent DE von 17 bis 19 und einer dynamischen Viskosität einer 40%igen wäßrigen Lösung η⁴⁰ von 0,021 Pa·s) wird auf 85°C erhitzt und mit 10 Gew.-% von Zulauf 1 und 20 Gew.-% von Zulauf 2 versetzt. Es wird 15 min bei 85°C anpolymerisiert und anschließend mit der Dosierung der Restmengen der Zuläufe 1 und 2 begonnen. Die Zugabe erfolgt kontinuierlich über 2,5 Stunden (Zulauf 1) und 3 Stunden (Zulauf 2). Danach wird 1 Stunde bei 85°C nachpolymerisiert. Anschließend wird der Ansatz durch Zugabe einer Lösung von 4,67 g Wasserstoffperoxid (30%ig), 1,4 g Ascorbinsäure und 0,35 g Eisen(II)sulfat in 5 g Wasser über einen Zeitraum von 60 min chemisch desodoriert. Der Ansatz wird schließlich mit 10%iger Natronlauge auf pH 4,5 eingestellt.

| | |
|---|---|
| Zulauf 1 | 300 g Wasser |
| | 23,33 g Dodecylbenzolsulfonat (15%ig in Wasser) |
| | 1,4 g t-Dodecylmercaptan |
| | 35 g Methacrylsäure |
| | 665 g n-Butylacrylat |
| | |
| Zulauf 2 | 100 g Wasser |
| | 4,2 g Natriumperoxodisulfat |

Feststoffgehalt der wäßrigen Polymerdispersion (gemessen nach DIN 53 189) : ca. 49,6 Gew.-%

### Beispiel 2 (erfindungsgemäß)

Ein Gemisch aus 464,5 g Wasser und 200 g Maltodextrin C*PUR 01915 wird auf 85°C erhitzt und mit 10 Gew.-% von Zulauf 1, 10 Gew.-% von Zulauf 2 und 20 Gew.-% von Zulauf 3 versetzt. Es wird 15 min bei 85°C anpolymerisiert und anschließend mit der Dosierung der Restmengen der Zuläufe 1, 2 und 3 begonnen. Die Zugabe erfolgt kontinuierlich über 2,5 Stunden (Zulauf 1 und 2) und 3 Stunden (Zulauf 3). Danach wird 1 Stunde bei 85°C nachpolymerisiert. Anschließend wird der Ansatz durch Zugabe einer Lösung von 6,67 g Wasserstoffperoxid (30%ig), 2 g Ascorbinsäure und 0,5 g Eisen(II)sulfat in 10 g Wasser über einen Zeitraum von 60 min chemisch desodoriert. Der Ansatz wird schließlich mit 10%iger Natronlauge auf pH 4,5 eingestellt.

| | |
|---|---|
| Zulauf 1 | 430 g Wasser |
| | 33,33 g Dodecylbenzolsulfonat (15%ig in Wasser) |
| | 2 g t-Dodecylmercaptan |
| | 950 g n-Butylacrylat |
| | |
| Zulauf 2 | 140 g Wasser |
| | 50 g Methacrylsäure |
| | |
| Zulauf 3 | 140 g Wasser |
| | 6 g Natriumperoxodisulfat |

Feststoffgehalt der wäßrigen Polymerdispersion (gemessen nach DIN 53 189): ca. 49,7 Gew.-%

### Beispiel 3 (erfindungsgemäß)

Ein Gemisch aus 464,5 g Wasser und 200 g Maltodextrin C*PUR 01915 wird auf 85°C erhitzt und mit 10 Gew.-% von Zulauf 1, 10 Gew.-% von Zulauf 2 und 20 Gew.-% von Zulauf 3 versetzt. Es wird 15 min bei 85°C anpolymerisiert und anschließend mit der Dosierung der Restmengen der Zuläufe 1, 2 und 3 begonnen. Die Zugabe erfolgt kontinuierlich über 2,5 Stunden (Zulauf 1 und 2) und 3 Stunden (Zulauf 3). Danach wird 1 Stunde bei 85°C nachpolymerisiert. Anschließend wird der Ansatz durch Zugabe einer Lösung von 6,67 g Wasserstoffperoxid (30%ig), 2 g Ascorbinsäure und 0,5 g Eisen(II)sulfat in 10 g Wasser über einen Zeitraum von 60 min chemisch desodoriert. Der Ansatz wird schließlich mit 10%iger Natronlauge auf pH 4,5 eingestellt.

| | |
|---|---|
| Zulauf 1 | 430 g Wasser |
| | 33,33 g Dodecylbenzolsulfonat (15%ig in Wasser) |
| | 2 g t-Dodecylmercaptan |
| | 970 g n-Butylacrylat |
| | |
| Zulauf 2 | 140 g Wasser |
| | 30 g Methacrylsäure |
| | |
| Zulauf 3 | 140 g Wasser |
| | 6 g Natriumperoxodisulfat |

Feststoffgehalt der wäßrigen Polymerdispersion (gemessen nach DIN 53 189): ca. 49,7 Gew.-%

### Beispiel 4 (erfindungsgemäß)

Ein Gemisch aus 464,5 g Wasser und 200 g Maltodextrin C*PUR 01915 wird auf 85°C erhitzt und mit 10 Gew.-% von Zulauf 1, 10 Gew.-% von Zulauf 2 und 20 Gew.-% von Zulauf 3 versetzt. Es wird 15 min bei 85°C anpolymerisiert und anschließend mit der Dosierung der Restmengen der Zuläufe 1, 2 und 3 begonnen. Die Zugabe erfolgt kontinuierlich über 2,5 Stunden (Zulauf 1 und 2) und 3 Stunden (Zulauf 3). Danach wird Stunde bei 85°C nachpolymerisiert. Anschließend wird der Ansatz durch Zugabe einer Lösung von 6,67 g Wasserstoffperoxid (30%ig), 2 g Ascorbinsäure und 0,5 g Eisen(II)sulfat in 10 g Wasser über einen Zeitraum von 60 min chemisch desodoriert. Der Ansatz wird schließlich mit 10%iger Natronlauge auf pH 4,5 eingestellt.

| | |
|---|---|
| Zulauf 1 | 430 g Wasser |
| | 33,33 g Dodecylbenzolsulfonat (15%ig in Wasser) |
| | 2 g t-Dodecylmercaptan |
| | 990 g n-Butylacrylat |
| | |
| Zulauf 2 | 140 g Wasser |
| | 10 g Methacrylsäure |
| | |
| Zulauf 3 | 140 g Wasser |
| | 6 g Natriumperoxodisulfat |

Feststoffgehalt der wäßrigen Polymerdispersion (gemessen nach DIN 53 189) : ca. 49,7 Gew.-%

### Beispiel 5 (erfindungsgemäß)

Ein Gemisch aus 544,05 g Wasser und 220 g Maltodextrin C*PUR 01915 wird auf 85°C erhitzt und mit 5 Gew.-% von Zulauf 1 und 20 Gew.-% von Zulauf 2 versetzt. Es wird 15 min bei 85°C anpolymerisiert und anschließend mit der Dosierung der Restmengen der Zuläufe 1 und 2 begonnen. Die Zugabe erfolgt kontinuierlich über 2,5 Stunden (Zulauf 1) und 3 Stunden (Zulauf 2). Danach wird 1 Stunde bei 85°C nachpolymerisiert. Anschließend wird der Ansatz durch Zugabe einer Lösung von 7,33 g Wasserstoffperoxid (30%ig), 2,2 g Ascorbinsäure und 0,55 g Eisen(II)sulfat in 10 g Wasser über einen Zeitraum von 60 min chemisch desodoriert.

| | |
|---|---|
| Zulauf 1 | 500 g Wasser |
| | 36,67 g Dodecylbenzolsulfonat (15%ig in Wasser) |
| | 3,3 g t-Dodecylmercaptan |
| | 55 g Methacrylsäure |
| | 110 g Ethylacrylat |
| | 935 g n-Butylacrylat |
| | |
| Zulauf 2 | 250 g Wasser |
| | 6,6 g Natriumperoxodisulfat |

Feststoffgehalt der wäßrigen Polymerdispersion (gemessen nach DIN 53 189): ca. 50,0 Gew.-%

### Beispiel 6 (erfindungsgemäß)

Ein Gemisch aus 544,05 g Wasser und 220 g Maltodextrin C*PUR 01915 wird auf 85°C erhitzt und mit 5 Gew.-% von Zulauf 1 und 20 Gew.-% von Zulauf 2 versetzt. Es wird 15 min bei 85°C anpolymerisiert und anschließend mit der Dosierung der Restmengen der Zuläufe 1 und 2 begonnen. Die Zugabe erfolgt kontinuierlich über 2,5 Stunden (Zulauf 1) und 3 Stunden (Zulauf 2). Danach wird 1 Stunde bei 85°C nachpolymerisiert. Anschließend wird der Ansatz durch Zugabe einer Lösung von 7,33 g Wasserstoffperoxid (30%ig), 2,2 g Ascorbinsäure und 0,55 g Eisen(II)sulfat in 10 g Wasser über einen Zeitraum von 60 min chemisch desodoriert.

| | |
|---|---|
| Zulauf 1 | 500 g Wasser |
| | 36,67 g Dodecylbenzolsulfonat (15%ig in Wasser) |
| | 3,3 g t-Dodecylmercaptan |
| | 33 g Methacrylsäure |
| | 110 g Ethylacrylat |
| | 957 g n-Butylacrylat |
| | |
| Zulauf 2 | 250 g Wasser |
| | 6,6 g Natriumperoxodisulfat |

Feststoffgehalt der wäßrigen Polymerdispersion (gemessen nach DIN 53 189): ca. 49,8 Gew.-%

### Beispiel 7 (erfindungsgemäß)

Ein Gemisch aus 544,05 g Wasser und 220 g Maltodextrin C*PUR 01915 wird auf 85°C erhitzt und mit 5 Gew.-% von Zulauf 1 und 20 Gew.-% von Zulauf 2 versetzt. Es wird 15 min bei 85°C anpolymerisiert und anschließend mit der Dosierung der Restmengen der Zuläufe 1 und 2 begonnen. Die Zugabe erfolgt kontinuierlich über 2,5 Stunden (Zulauf 1) und 3 Stunden (Zulauf 2). Danach wird 1 Stunde bei 85°C nachpolymerisiert. Anschließend wird der Ansatz durch Zugabe einer Lösung von 7,33 g Wasserstoffperoxid (30%ig), 2,2 g Ascorbinsäure und 0,55 g Eisen(II)sulfat in 10 g Wasser über einen Zeitraum von 60 min chemisch desodoriert.

| | |
|---|---|
| Zulauf 1 | 500 g Wasser |
| | 36,67 g Dodecylbenzolsulfonat (15%ig in Wasser) |
| | 3,3 g t-Dodecylmercaptan |
| | 11 g Methacrylsäure |
| | 110 g Ethylacrylat |
| | 979 g n-Butylacrylat |
| | |
| Zulauf 2 | 250 g Wasser |
| | 6,6 g Natriumperoxodisulfat |

Feststoffgehalt der wäßrigen Polymerdispersion (gemessen nach DIN 53 189): ca. 50,0 Gew.-%

### Beispiel 8 (erfindungsgemäß)

Ein Gemisch aus 434,05 g Wasser und 110 g Maltodextrin C*PUR 01915 wird auf 85°C erhitzt und mit 10 Gew.-% von Zulauf 1 und 20 Gew.-% von Zulauf 2 versetzt. Es wird 15 min bei 85°C anpolymerisiert und anschließend mit der Dosierung der Restmengen der Zuläufe 1 und 2 begonnen. Die Zugabe erfolgt kontinuierlich über 2,5 Stunden (Zulauf 1) und 3 Stunden (Zulauf 2). Danach wird 1 Stunde bei 85°C nachpolymerisiert. Anschließend wird der Ansatz durch Zugabe einer Lösung von 7,33 g Wasserstoffperoxid (30%ig), 2,2 g Ascorbinsäure und 0,55 g Eisen(II)sulfat in 10 g Wasser über einen Zeitraum von 60 min chemisch desodoriert. Der Ansatz wird schließlich mit 10%iger Natronlauge auf pH 4,5 eingestellt.

| | |
|---|---|
| Zulauf 1 | 500 g Wasser |
| | 36,67 g Natriumlaurylsulfat (15%ig in Wasser) |
| | 3,3 g t-Dodecylmercaptan |
| | 55 g Methacrylsäure |
| | 1045 g n-Butylacrylat |
| | |
| Zulauf 2 | 250 g Wasser |
| | 6,6 g Natriumperoxodisulfat |

Feststoffgehalt der wäßrigen Polymerdispersion (gemessen nach DIN 53 189): ca. 50,6 Gew.-%

### Beispiel 9 (erfindungsgemäß)

Ein Gemisch aus 544,05 g Wasser und 220 g Maltodextrin C*PUR 01915 wird auf 85°C erhitzt und mit 5 Gew.-% von Zulauf 1 und 20 Gew.-% von Zulauf 2 versetzt. Es wird 15 min bei 85°C anpolymerisiert und anschließend mit der Dosierung der Restmengen der Zuläufe 1 und 2 begonnen. Die Zugabe erfolgt kontinuierlich über 2,5 Stunden (Zulauf 1) und 3 Stunden (Zulauf 2). Danach wird 1 Stunde bei 85°C nachpolymerisiert. Anschließend wird der Ansatz durch Zugabe einer Lösung von 7,33 g Wasserstoffperoxid (30%ig), 2,2 g Ascorbinsäure und 0,55 g Eisen(II)sulfat in 10 g Wasser über einen Zeitraum von 60 min chemisch desodoriert.

| | |
|---|---|
| Zulauf 1 | 500 g Wasser |
| | 36,67 g Dodecylbenzolsulfonat (15%ig in Wasser) |
| | 3,3 g t-Dodecylmercaptan |
| | 55 g Methacrylsäure |
| | 110 g Ethylhexylacrylat |
| | 935 g n-Butylacrylat |
| | |
| Zulauf 2 | 250 g Wasser |
| | 6,6 g Natriumperoxodisulfat |

Feststoffgehalt der wäßrigen Polymerdispersion (gemessen nach DIN 53 189): ca. 49,9 Gew.-%

### Beispiel 10 (erfindungsgemäß)

Ein Gemisch aus 549,45 g Wasser und 220 g Maltodextrin C*PUR 01915 wird auf 85°C erhitzt und mit 5 Gew.-% von Zulauf 1 und 20 Gew.-% von Zulauf 2 versetzt. Es wird 15 min bei 85°C anpolymerisiert und anschließend mit der Dosierung der Restmengen der Zuläufe 1 und 2 begonnen. Die Zugabe erfolgt kontinuierlich über 2,5 Stunden (Zulauf 1) und 3 Stunden (Zulauf 2). Danach wird 1 Stunde bei 85°C nachpolymerisiert. Anschließend wird der Ansatz durch Zugabe einer Lösung von 7,33 g Wasserstoffperoxid (30%ig), 2,2 g Ascorbinsäure und 0,55 g Eisen(II)sulfat in 10 g Wasser über einen Zeitraum von 60 min chemisch desodoriert.

| | |
|---|---|
| Zulauf 1 | 350 g Wasser |
| | 36,67 g Dodecylbenzolsulfonat (15%ig in Wasser) |
| | 2,2 g t-Dodecylmercaptan |
| | 55 g Methacrylsäure |
| | 110 g Ethylacrylat |
| | 935 g n-Butylacrylat |
| | |
| Zulauf 2 | 150 g Wasser |
| | 6,6 g Natriumperoxodisulfat |

Feststoffgehalt der wäßrigen Polymerdispersion (gemessen nach DIN 53 189): ca. 55,0 Gew.-%

### Beispiel 11 (erfindungsgemäß)

Ein Gemisch aus 446,53 g Wasser und 220 g Maltodextrin C*PUR 01915 wird auf 85°C erhitzt und mit 5 Gew.-% von Zulauf 1 und 20 Gew.-% von Zulauf 2 versetzt. Es wird 15 min bei 85°C anpolymerisiert und anschließend mit der Dosierung der Restmengen der Zuläufe 1 und 2 begonnen. Die Zugabe erfolgt kontinuierlich über 2,5 Stunden (Zulauf 1) und 3 Stunden (Zulauf 2). Danach wird 1 Stunde bei 85°C nachpolymerisiert. Anschließend wird der Ansatz durch Zugabe einer Lösung von 7,33 g Wasserstoffperoxid (30%ig), 2,2 g Ascorbinsäure und 0,55 g Eisen(II)sulfat in 10 g Wasser über einen Zeitraum von 60 min chemisch desodoriert.

| | |
|---|---|
| Zulauf 1 | 300 g Wasser |
| | 36,67 g Dodecylbenzolsulfonat (15%ig in Wasser) |
| | 2,2 g t-Dodecylmercaptan |
| | 55 g Methacrylsäure |
| | 110 g Ethylacrylat |
| | 935 g n-Butylacrylat |
| | |
| Zulauf 2 | 100 g Wasser |
| | 6,6 g Natriumperoxodisulfat |

Feststoffgehalt der wäßrigen Polymerdispersion (gemessen nach DIN 53 189): ca. 60,0 Gew.-%

### Beispiel 12 (erfindungsgemäß)

Ein Gemisch aus 227,66 g Wasser und 220 g Maltodextrin C*PUR 01915 wird auf 85°C erhitzt und mit 5 Gew.-% von Zulauf 1 und 20 Gew.-% von Zulauf 2 versetzt. Es wird 15 min bei 85°C anpolymerisiert und anschließend mit der Dosierung der Restmengen der Zuläufe 1 und 2 begonnen. Die Zugabe erfolgt kontinuierlich über 2,5 Stunden (Zulauf 1) und 3 Stunden (Zulauf 2). Danach wird 1 Stunde bei 85°C nachpolymerisiert. Anschließend wird der Ansatz durch Zugabe einer Lösung von 7,33 g Wasserstoffperoxid (30%ig), 2,2 g Ascorbinsäure und 0,55 g Eisen(II)sulfat in 10 g Wasser über einen Zeitraum von 60 min chemisch desodoriert.

| | |
|---|---|
| Zulauf 1 | 200 g Wasser |
| | 36,67 g Dodecylbenzolsulfonat (15%ig in Wasser) |
| | 2,2 g t-Dodecylmercaptan |
| | 55 g Methacrylsäure |
| | 110 g Ethylacrylat |
| | 935 g n-Butylacrylat |
| | |
| Zulauf 2 | 100 g Wasser |
| | 6,6 g Natriumperoxodisulfat |

Feststoffgehalt der wäßrigen Polymerdispersion (gemessen nach DIN 53 189): ca. 70,0 Gew.-%

### Vergleichsbeispiel 1 (ohne Zusatz eines Stärkeabbauprodukts)

Es werden 297,28 g Wasser auf 85°C erhitzt und mit 10 Gew.-% von Zulauf 1 und 20 Gew.-% von Zulauf 2 versetzt. Es wird 15 min bei 85°C anpolymerisiert und anschließend mit der Dosierung der Restmengen der Zuläufe 1 und 2 begonnen. Die Zugabe erfolgt kontinuierlich über 2,5 Stunden (Zulauf 1) und 3 Stunden (Zulauf 2). Danach wird Stunde bei 85°C nachpolymerisiert. Anschließend wird der Ansatz durch Zugabe einer Lösung von 7,33 g Wasserstoffperoxid (30%ig), 2,2 g Ascorbinsäure und 0,55 g Eisen(II)sulfat in 10 g Wasser über einen Zeitraum von 60 min chemisch desodoriert. Der Ansatz wird schließlich mit 10%iger Natronlauge auf pH 4,5 eingestellt.

| | |
|---|---|
| Zulauf 1 | 500 g Wasser |
| | 73,33 g Dodecylbenzolsulfonat (15%ig in Wasser) |
| | 2,2 g t-Dodecylmercaptan |
| | 55 g Methacrylsäure |
| | 1045 g n-Butylacrylat |
| | |
| Zulauf 2 | 250 g Wasser |
| | 6,6 g Natriumperoxodisulfat |

Feststoffgehalt der wäßrigen Polymerdispersion (gemessen nach DIN 53 189) : ca. 50,0 Gew.-%

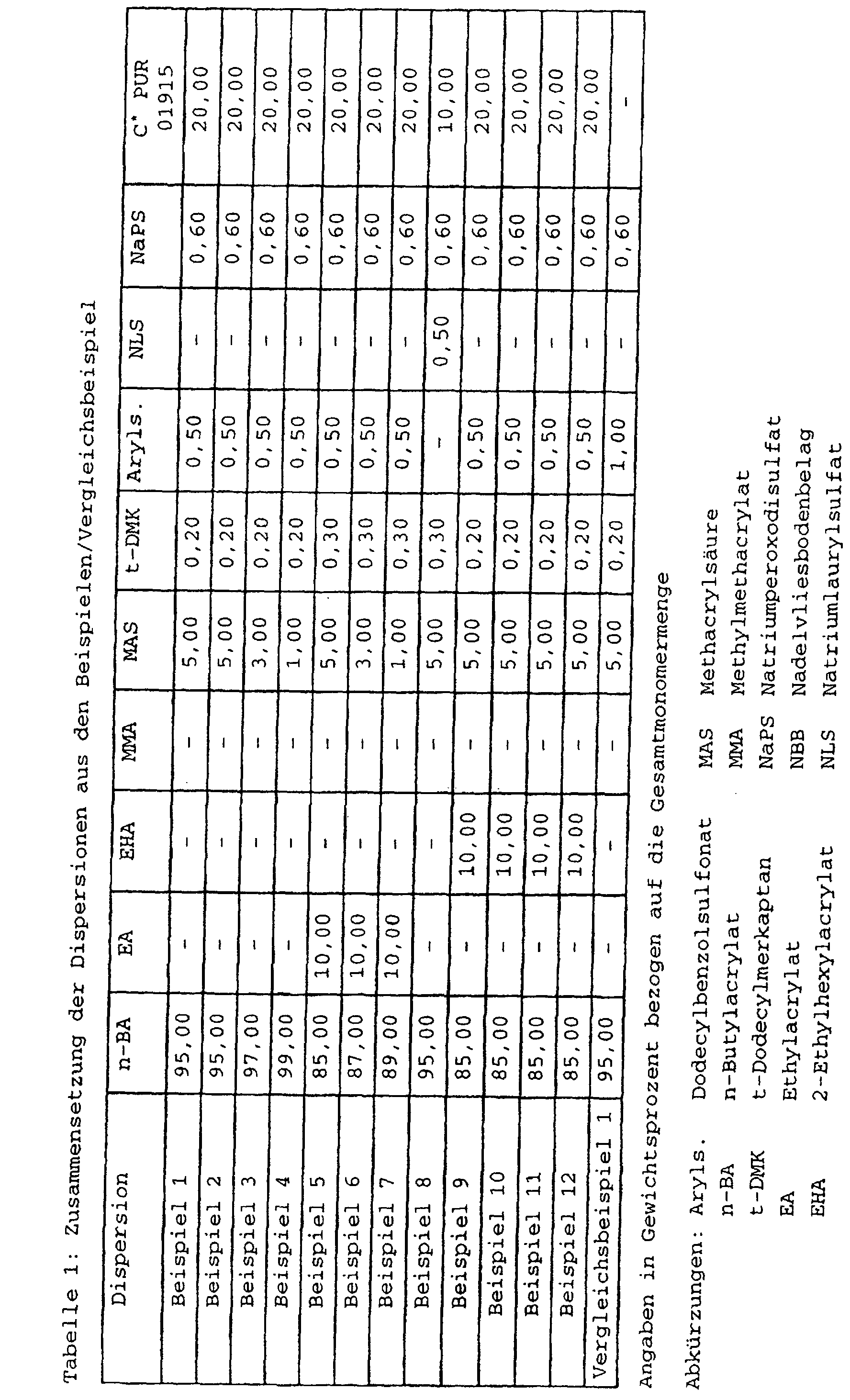

### b) Herstellung der Dispersionspulver durch Sprühtrocknung

Die Sprühtrocknung erfolgt in einer Anlage in Gleichstromfahrweise. Die Zerstäubung erfolgt mittels Zweistoffdüse, die Pulverabscheidung (Wertproduktgewinnung) erfolgt durch Zyklonabscheidung. Alternativ kann man durch Zerstäubung mit einem Zentrifugalzerstäuber (Scheibenzerstäubung) und Pulverabscheidung mit Filterelementen trocknen.
Dispersionspulver 1 (erfindungsgemäß)
   Sprühtrocknung der unverdünnten wäßrigen Polymerdispersion aus Beispiel 1.
Dispersionspulver 2 (erfindungsgemäß)
   Sprühtrocknung von Beispiel 2.
Dispersionspulver 3 (erfindungsgemäß)
   Sprühtrocknung von Beispiel 3.
Dispersionspulver 4 (erfindungsgemäß)
   Sprühtrocknung von Beispiel 4.
Dispersionspulver 5 (erfindungsgemäß)
   Sprühtrocknung von Beispiel 5.
Dispersionspulver 6 (erfindungsgemäß)
   Sprühtrocknung von Beispiel 6
Dispersionspulver 7 (erfindungsgemäß)
   Sprühtrocknung von Beispiel 7.
Dispersionspulver 8 (erfindungsgemäß)
   Sprühtrocknung von Beispiel 8.
Dispersionspulver 9 (erfindungsgemäß)
   Sprühtrocknung von Beispiel 9.
Dispersionspulver 10 (erfindungsgemäß)
   Sprühtrocknung der mit Wasser auf einen Feststoffgehalt von 40% verdünnten wäßrigen Polymerdispersion aus Beispiel 10.
Dispersionspulver 11 (erfindungsgemäß)
   Sprühtrocknung der mit Wasser auf einen Feststoffgehalt von 40% verdünnten wäßrigen Polymerdispersion aus Beispiel 11.
Dispersionspulver 12 (erfindungsgemäß)
   Sprühtrocknung der mit Wasser auf einen Feststoffgehalt von 40% verdünnten wäßrigen Polymerdispersion aus Beispiel 12.
Vergleichsdispersionspulver 1
   1,7 1 der wäßrigen Polymerdispersion aus Vergleichsbeispiel 1 werden mit einer Lösung von Maltodextrin 01915 (140 g) in Wasser (140 g) versetzt. Die Sprühtrocknung erfolgt wie oben beschrieben.
Vergleichsdispersionspulver 2
   Die wäßrige Polymerdispersion aus dem erfindungsgemäßen Beispiel 1 wird mit 10%iger Natronlauge auf einen pH-Wert von 8 eingestellt. Die Sprühtrocknung erfolgt wie oben beschrieben.

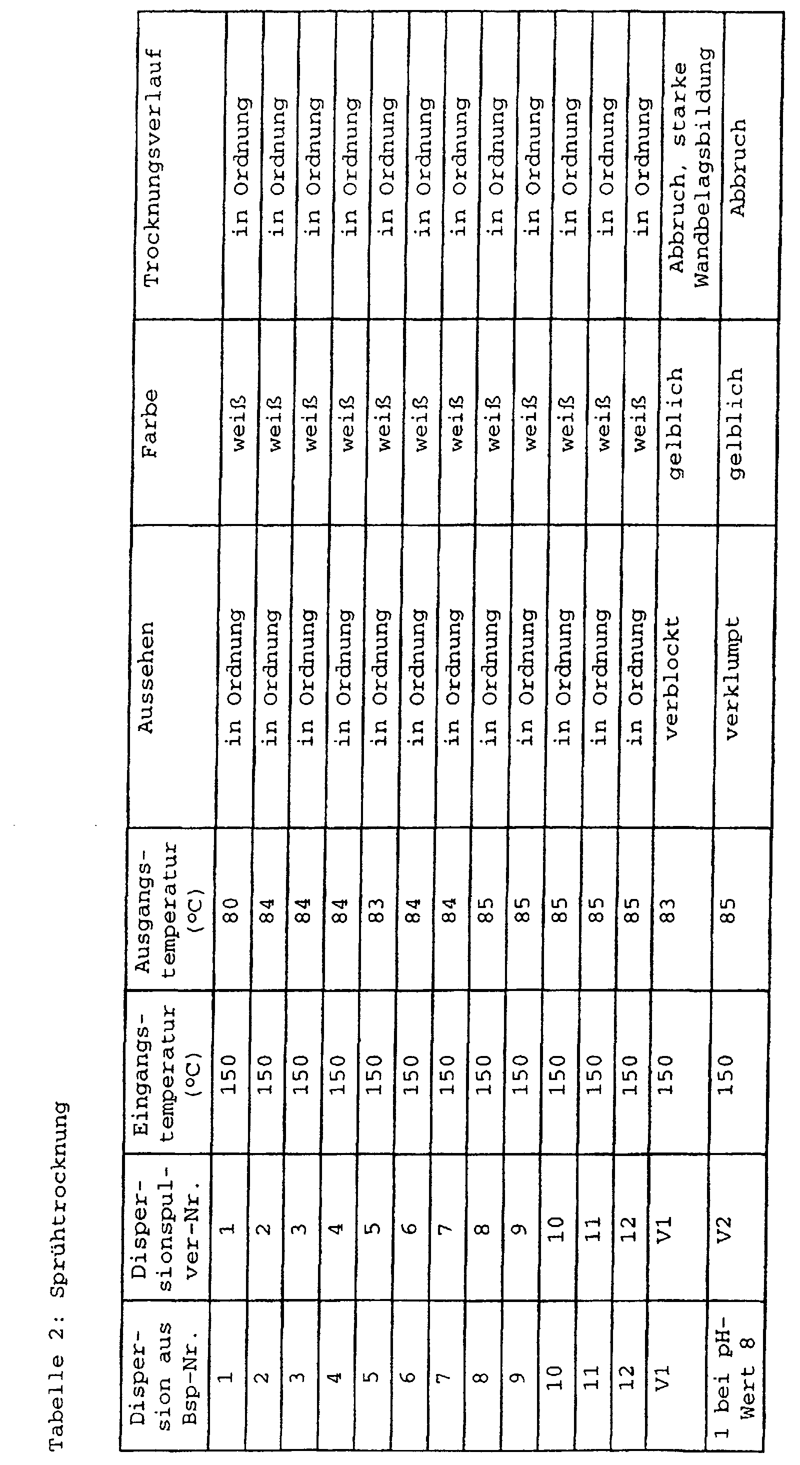

Aus der Tabelle 2 zur Sprühtrocknung kann man entnehmen, daß die Dispersionspulver 1 bis 12 unter den gewählten Sprühtrocknungsbedingungen problemlos herstellbar sind. Der Versuch mit dem Vergieichsdispersionspulver 1 belegt, daß die Sprühtrocknung nicht ausreichend durchführbar ist, wenn das Schutzkolloid C* PUR 01915 nach der Dispersionsherstellung zugemischt wird. Notwendig ist eine Polymerisation der Dispersion in Gegenwart der Maltodextrinmoleküle, wie in den erfindungsgemäßen Beispielen 1 bis 12 durchgeführt. Der Versuch, die Dispersion aus Beispiel 1 sprühzutrocknen nachdem der pH-Wert auf 8 angehoben wurde, mißlingt wie Vergleichsdispersionspulver 2 belegt. Es ist notwendig, die Sprühtrocknung von stärkehaltigen Dispersionen im sauren pH-Bereich durchzuführen.

### c) Anwendungstechnische Eigenschaften

Die Dispersionspulver 1 bis 12 werden mit erfindungsgemäßen Zusätzen durch kräftiges Schütteln von Hand zu pulverförmigen Klebstoffen formuliert und anschließend mit einem Rührer zu einer wäßrigen Klebstofformulierung gemischt. Tabelle 3 gibt die Zusammensetzungen der Klebstofformulierungen wieder.

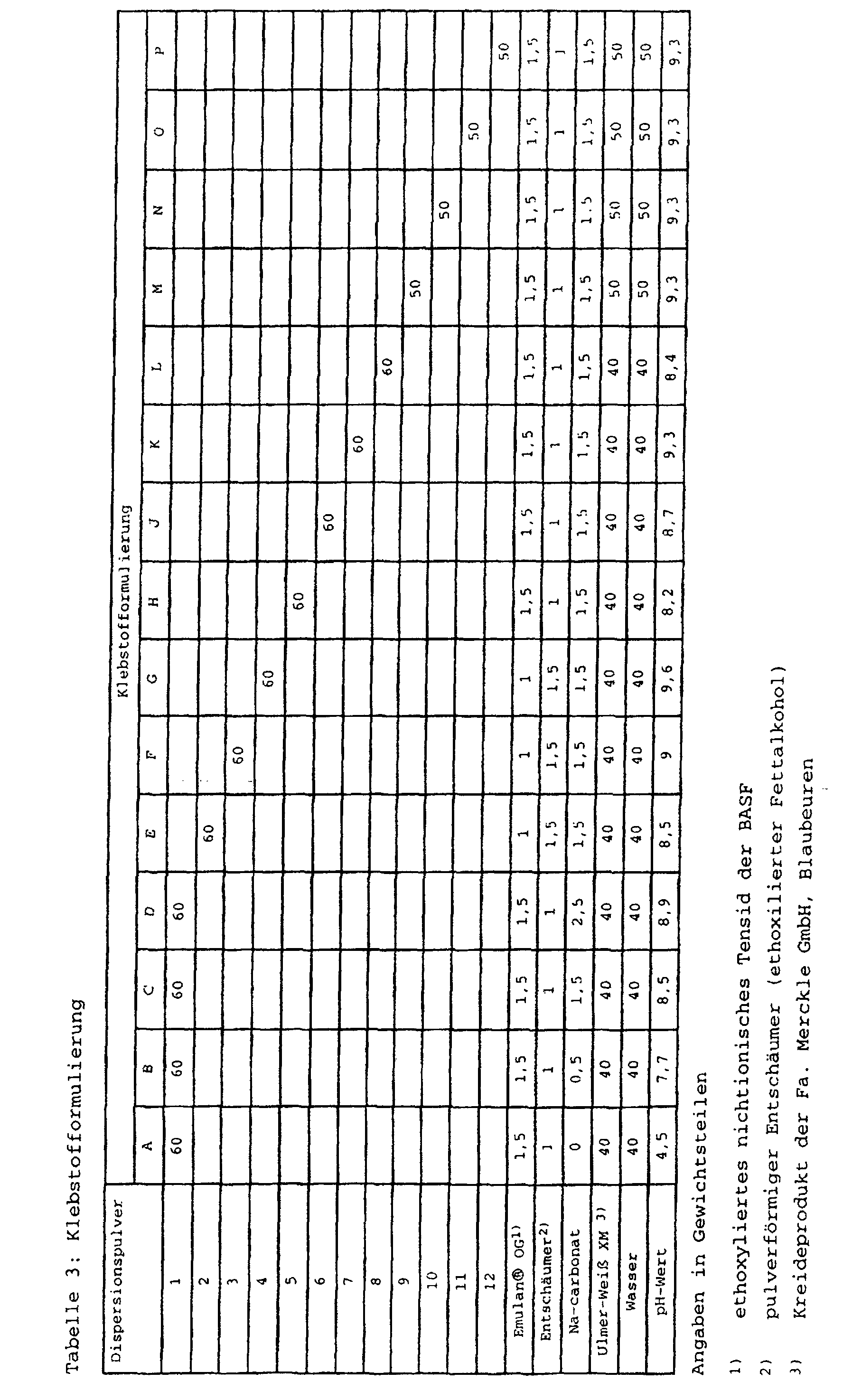

### - Naßanzugsvermögen (Tabelle 4)

Der Klebstoff wird mit einer 2 mm Rakel auf eine Zementfaserplatte (Eterflex® 2000) (20 x 50 cm) in Abzugsrichtung aufgetragen. Die Auftragsmenge beträgt 350 g/m² bis 450 g/m². Nach einer Ablüftzeit von 10 min werden Nadelvliesbodenbeläge (NBB-Streifen) in das Kleberbett gelegt und mit einer 2,5 kg schweren Walze durch 3-mal Hin- und Herrollen angepreßt. Nach den angegebenen Zeiten werden die Beläge mit einem Abzugsgerät (Abzugsgeschwindigkeit 725 mm/min) abgezogen und dabei die Zunahme des Abschälwiderstandes in N/5 cm angegeben. Als Vergleichsklebstoff diente ein handelsüblicher Teppichklebstoff auf Dispersionsbasis.

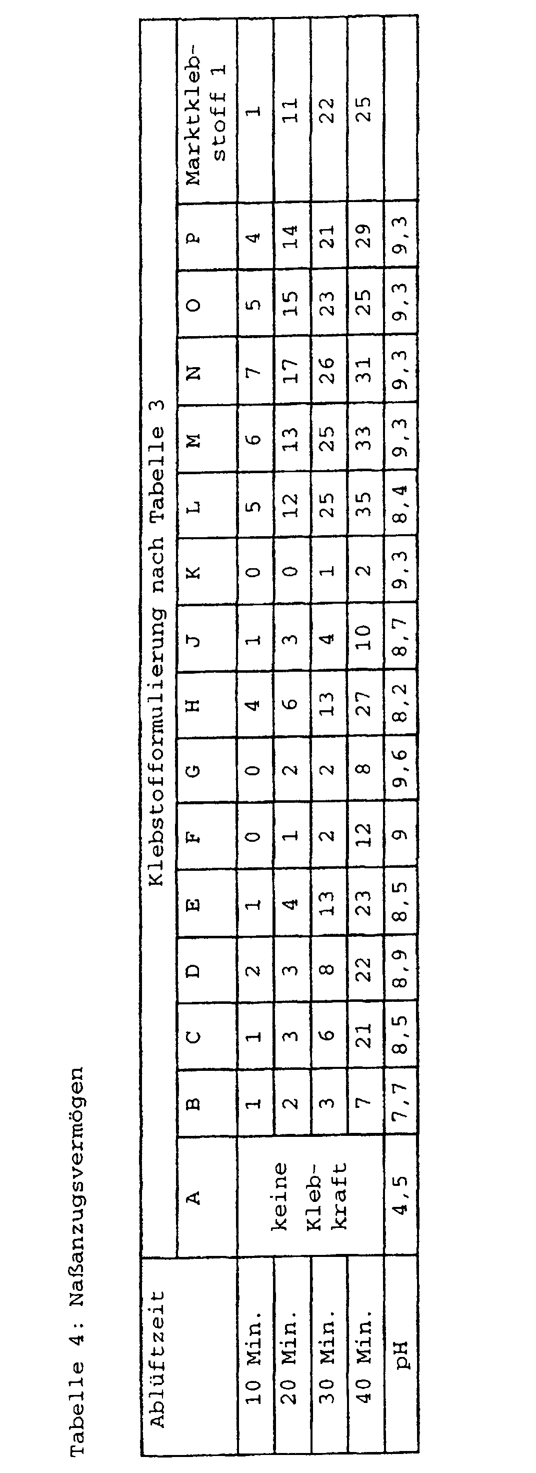

Die Klebstofformulierungen A bis D zeigen beispielhaft den Einfluß des pH-Wertes auf das Naßanzugsvermögen. Es wurde festgestellt, daß das im sauren pH-Wertbereich sprühgetrocknete Dispersionspulver in der Klebstofformulierung erst dann eine Klebkraft entwickelt, wenn durch Zusatz von Natriumcarbonat der pH-Wert in den alkalischen Bereich angehoben wird (B, C und D). Im sauren pH-Wertbereich (A) ist fast keine Klebkraft feststellbar.

) Die Klebstofformulierungen E, F und G bzw. H, J und K belegen beispielhaft, daß für den Aufbau einer Klebkraft säuregruppenhaltige Comonomere im Polymerisat notwendig sind. Enthalten die Dispersionspulver z.B. keine Methacrylsäure, so wird kein Aufbau der Klebkraft festgestellt (Werte nicht gezeigt). Besonders gute Klebewerte werden beim Einbau von 5 Gew.-% Methacrylsäure erreicht (Klebstofformulierung E, H und L bis P)

Ein Vergleich mit einem handelsüblichen Fußbodenklebstoff (... auf Dispersionsbasis und nicht auf Dispersionspulverbasis) zeigt, daß im allgemeinen die erfindungsgemäßen Dispersionspulver in einer Klebstofformulierung beim Naßanzugsvermögen in der gleichen Größenordnung liegen wie ein handelsüblicher Kleber auf Dispersionsbasis.

### - Trockenanfaßvermögen

Substrate sowie Klebstoff werden 24 h bei Normklima (23°C/50% rel. Feuchte) konditioniert. Der Klebstoff wird mit einer genormten Scherrakel (1 mm) in Längsrichtung auf den Belag Eterflex® 2000 (500 x 200 x 7,5 mm) aufgetragen. Ein Bodenbelag aus Polyvinylchlorid (Pegulan® B 1 Testbelag (250 x 50 mm) wird nach den Ablüftezeiten gemäß Tabelle 5 in das Kleberbett eingelegt und mit einer 2,5 kg Walze durch 3-mal Hin- und Herrollen angepreßt. Die Prüfung erfolgt durch Abschälen im Abzugsgerät mit 725 mm/Minute sofort nach dem Verkleben. Zur Auswertung wird der Mittelwert aus zwei Prüfkörpern in N/5 cm gebildet. Die Ergebnisse sind in Tabelle 5 wiedergegeben.

**Tabelle 5:**

| Trockenanfaßvermögen: Eternit/PVC | | |
|---|---|---|
| Ablüftzeit | Klebstofformulierung | |
| | Formulierung 0 | Marktklebstoff 1 |
| 10 Min. | 0 | 2 |
| 20 Min. | 10 | 21 |
| 30 Min. | 14 | 20 |
| 40 Min. | 10 | 15 |

Die Tabelle 5 zeigt beispielhaft den Vergleich einer erfindungsgemäßen Klebstofformulierung O mit den Marktklebern. Wie beim Naßanzugsvermögen liegt auch beim Trockenanfaßvermögen die Klebstofformulierung O in der gleichen Größenordnung wie die Marktkleber.

### -Schamponierfestigkeit (DIN 16860) :

Mit einer 2 mm Rakel werden 350 g/m² bis 450 g/m² Klebstofformulierung auf eine Zementfaserplatte (Eterflex® 2000/(20 x 50 cm) aufgetragen und nach einer Ablüftzeit von 10 Minuten NBB-Streifen in das Klebebett gelegt und angepreßt. Nach 14 Tagen Lagerung der Teppichverklebung bei Raumtemperatur wird die Eterflex/NBB-Verklebung mit einem in eine Tensidlösung (K8) getränkten Haushaltsschwamm durch kräftiges Reiben shampooniert. Nach einer Verweilzeit von 10 min wird die Verklebung mit klarem Wasser nachgereinigt und mit einem trockenen Tuch abgetrocknet. Danach wird am Abzugsgerät die Verklebungskraft geprüft. Die Meßwerte werden in N/5 cm angegeben und sind in Tabelle 6 wiedergegeben.

**Tabelle 6:**

| Schamponierfestigkeit | | | | | |
|---|---|---|---|---|---|
| Kleber | Kraft der Verklebung | Kraft der Verklebung Shamponiert | Kraft der Verklebung nach 1 d Trocknung | Kraft der Verklebung nach 7 d Trocknung | Kraft der Verklebung nach 3 Wochen RT |
| Dispersionspulver 9 | >100 | 75 | 95 | >100 | >100 |

Die Tabelle 6 zeigt, daß eine Klebstofformulierung auf der Basis der erfindungsgemäßen Dispersionspulver eine gute Schamponierfestigkeit aufweist, wobei nach längerem Trocknen die Klebewerte vor der Schamponierung wieder erreicht werden. Die gute Schamponierfestigkeit ist überraschend, da durch die Verwendung von Stärkemolekülen in dem benötigtem Gewichtsanteil eine erhöhte Wasseraufnahme und damit eine schlechte Schamponierfestigkeit erwartet werden konnte.

## Patentansprüche

1. Pulverförmiger Klebstoff, enthaltend:
a) 5,0 bis 98,9 Gew.-% eines redispergierbaren Polymerpulvers, das erhältlich ist durch radikalische Copolymerisation einer Mischung M, die 50 bis 99,9 Gew.-% mindestens eines ethylenisch ungesättigten Monomers und 0,1 bis 15 Gew.-% mindestens eines wasserlöslichen, säuregruppenhaltigen Comonomers umfaßt, zu einem Polymerisat P mit einer Glasübergangstemperatur ≤ 20°C, nach dem Verfahren der radikalischen wässrigen Emulsionspolymerisation in Gegenwart mindestens einer verzuckerten Stärke mit einem gewichtsmittleren Molekulargewicht von 2500 bis 25000 als Schutzkolloid sowie gegebenenfalls weiterer Zusatzstoffe, unter Erhalt einer wässrigen Polymerisatdispersion und Sprühtrocknen der Dispersion bei einem pH-Wert von 1 bis 7,
b) 1 bis 94,9 Gew.-% mindestens eines Füllstoffs,
c) 0,1 bis 10 Gew.-% mindestens eines alkalischen Zusatzes,
d) 0 bis 10 Gew.-% mindestens eines Emulgators,
e) 0 bis 30 Gew.-% weiterer Zusätze.

2. Klebstoff nach Anspruch 1, enthaltend:
15 bis 70 Gew.-%, bevorzugt 30 bis 60 Gew.-% des redispergierbaren Polymerpulvers a) und
30 bis 85 Gew.-% des Füllstoffes b).

3. Klebstoff nach einem der Ansprüche 1 oder 2, wobei die Mischung M 60 bis 99 Gew.-% mindestens eines radikalisch polymerisierbaren, ethylenisch ungesättigten Monomers und 1 bis 10 Gew.-% mindestens eines wasserlöslichen, säuregruppenhaltigen Comonomers enthält.

4. Klebstoff nach einem der Ansprüche 1 bis 3, wobei das ethylenisch ungesättigte Monomer ausgewählt ist unter Monoolefinen, Vinylaromaten, Vinylhalogeniden, Vinylidenhalogeniden, Estern von Vinylalkoholen mit Monocarbonsäuren, Estern α,β-ungesättigter Mono- und Dicarbonsäuren, α,β-ethylenisch ungesättigten Nitrilen, nicht aromatischen Kohlenwasserstoffen mit mindestens zwei olefinischen Doppelbindungen und/oder deren Mischungen.

5. Klebstoff nach einem der Ansprüche 1 bis 4, wobei die Mischung M als Comonomer mindestens eine α,β-monoethylenisch ungesättigte Mono- und/oder Dicarbonsäure, ausgewählt unter Acrylsäure, Methacrylsäure, Maleinsäure, Fumarsäure, Itaconsäure und/oder Crotonsäure, enthält.

6. Klebstoff nach einem der Ansprüche 1 bis 5, wobei das ethylenisch ungesättigte Monomer der Mischung M ausgewählt ist unter Styrol, α-Methylstyrol, o-Chlorstyrol, Vinyltoluolen, Vinylchlorid, Vinylidenchlorid, Estern der Acrylsäure und/oder Methacrylsäure mit Methanol, Ethanol, n-Propanol, Isopropanol, n-Butanol, Isobutanol und 2-Ethylhexanol, Vinylacetat, Ethylen, 1,3-Butadien, Isopren und deren Mischungen, bevorzugt unter Styrol, Methylmethacrylat, Ethylacrylat, 2-Ethylhexylacrylat, Butylacrylat und deren Mischungen.

7. Klebstoff nach einem der Ansprüche 1 bis 6, wobei die α,β-monoethylenisch ungesättigte Mono- und/oder Dicarbonsäure der Mischung M Acrylsäure, Methacrylsäure oder eine Mischung davon ist.

8. Klebstoff nach Anspruch 1, wobei die Mischung M in Gegenwart von 5 bis 40 Gew.-%, bevorzugt 10 bis 30 Gew.-%, insbesondere bevorzugt 15 bis 25 Gew.-% mindestens eines Stärkeabbauproduktes, bezogen auf die Menge an polymerisierten Monomeren, polymerisiert wird.

9. Klebstoff nach einem der Ansprüche 1 bis 8, wobei die Glasübergangstemperatur des Polymerisats P ≤ 0°C, bevorzugt ≤ -10°C, insbesondere bevorzugt ≤ -20°C, speziell ≤ -30°C beträgt.

10. Klebstoff nach einem der Ansprüche 1 bis 9, wobei der Füllstoff b) ausgewählt ist unter Kreide, Calcit, Dolomit, Quarzmehl, Titandioxid, Aluminiumsilikat, Talkum, Glimmer, Kieselgur, Gips, Magnesit, Schiefermehl, Bariumsulfat, harten Polymerisaten oder deren Mischungen.

11. Klebstoff nach einem der Ansprüche 1 bis 10, wobei der alkalische Zusatz c) ausgewählt ist unter Alkalihydroxiden, Erdalkalihydroxiden, Erdalkalioxiden, Alkalicarbonaten, Alkalihydrogencarbonaten, Silikaten und deren Mischungen.

12. Verwendung der pulverförmigen Klebstoffe nach einem der Ansprüche 1 bis 11 in wäßrigen Klebstofformulierungen.

13. Verwendung nach Anspruch 12, wobei der Feststoffgehalt der wäßrigen Formulierungen 40 bis 99 Gew.-%, bevorzugt 40 bis 95 Gew.-%, insbesondere bevorzugt 50 bis 90 Gew.-%, bezogen auf das Gesamtgewicht der Formulierung beträgt.

14. Verwendung nach einem der Ansprüche 12 oder 13 als Fußbodenklebstoff, Teppichbodenklebstoff, Fliesenkleber, Tapetenklebstoff oder Klebstoff für Textilien, Kunststoff, Holz und Metall.

15. Wäßrige Klebstofformulierung, erhältlich durch Mischen wenigstens eines pulverförmigen Klebstoffs nach einem der Ansprüche 1 bis 11 mit Wasser.

16. Wäßrige Klebstofformulierung nach Anspruch 15 mit einem pH-Wert größer als 6, bevorzugt größer als 7, insbesondere bevorzugt größer als 8.

## Claims

1. A pulverulent adhesive comprising:
a) from 5.0 to 98.9% by weight of a redispersible polymer powder which is obtainable by free radical copolymerization of a mixture M comprising from 50 to 99.9% by weight of at least one ethylenically unsaturated monomer and from 0.1 to 15% by weight of at least one water-soluble comonomer which contains acid groups, to form a polymer P having a glass transition temperature of ≤ 20°C, by the process of free-radical aqueous emulsion polymerization in the presence of at least one saccharified starch having a weight-average molecular weight of from 2500 to 25 000, as protective colloid, and further additives if desired, to give an aqueous polymer dispersion, and spray-drying of the dispersion at a pH of from 1 to 7,
b) from 1 to 94.9% by weight of at least one filler,
c) from 0.1 to 10% by weight of at least one alkaline additive,
d) from 0 to 10% by weight of at least one emulsifier, and,
e) from 0 to 30% by weight of further additives.

2. An adhesive as claimed in claim 1 comprising:
from 15 to 70% by weight, preferably from 30 to 60% by weight of the redispersible polymer powder a) and
from 30 to 85% by weight of the filler b).

3. An adhesive as claimed in either of claims 1 and 2, where the mixture M contains from 60 to 99% by weight of at least one free-radically polymerizable, ethylenically unsaturated monomer and from 1 to 10% by weight of at least one water-soluble comonomer which contains acid groups.

4. An adhesive as claimed in any of claims 1 to 3, where the ethylenically unsaturated monomer is selected from the group consisting of monoolefins, vinyl aromatic compounds, vinyl halides, vinylidene halides, esters of vinyl alcohols with monocarboxylic acids, esters of α,β-unsaturated mono- and dicarboxylic acids, α,β-ethylenically unsaturated nitriles, nonaromatic hydrocarbons having at least two olefinic double bonds, and mixtures thereof.

5. An adhesive as claimed in any of claims 1 to 4, where the mixture M comprises as comonomer at least one α,β-monoethylenically unsaturated mono- and/or dicarboxylic acid selected from acrylic, methacrylic, maleic, fumaric, itaconic and/or crotonic acid.

6. An adhesive as claimed in any of claims 1 to 5, where the ethylenically unsaturated monomer of the mixture M is selected from the group consisting of styrene, α-methylstyrene, o-chlorostyrene, vinyltoluenes, vinyl chloride, vinylidene chloride, esters of acrylic and/or methacrylic acid with methanol, ethanol, n-propanol, isopropanol, n-butanol, isobutanol and 2-ethylhexanol, vinyl acetate, ethylene, 1,3-butadiene, isoprene and mixtures thereof, preferably from styrene, methyl methacrylate, ethyl acrylate, 2-ethylhexyl acrylate, butyl acrylate and mixtures thereof.

7. An adhesive as claimed in any of claims 1 to 6, where the α,β-monoethylenically unsaturated mono- and/or dicarboxylic acid of the mixture M is acrylic acid, methacrylic acid or a mixture thereof.

8. An adhesive as claimed in claim 1, where the mixture M is polymerized in the presence of from 5 to 40% by weight, preferably from 10 to 30% by weight and, with particular preference, from 15 to 25% by weight of at least one starch degradation product based on the amount of monomers to be polymerized.

9. An adhesive as claimed in any of claims 1 to 8, where the glass transition temperature of the polymer P ≤ 0°C, preferably ≤ -10°C, especially preferably ≤ -20°C, and especially ≤ -30°C.

10. An adhesive as claimed in any of claims 1 to 9, where the filler b) is selected from the group consisting of chalk, calcite, dolomite, quartz flour, titanium dioxide, aluminum silicate, talc, mica, kieselguhr, gypsum, magnesite, slate flour, barium sulfate, hard polymers and mixtures thereof.

11. An adhesive as claimed in any of claims 1 to 10, where the alkaline additive c) is selected from the group consisting of alkali metal hydroxides, alkaline earth metal hydroxides, alkaline earth metal oxides, alkali metal carbonates, alkali metal bicarbonates, silicates and mixtures thereof.

12. The use of a pulverulent adhesive as claimed in any of claims 1 to 11 in aqueous adhesive formulations.

13. The use as claimed in claim 12, where the solids content of the aqueous formulations is from 40 to 99% by weight, preferably from 40 to 95% by weight and, with particular preference, from 50 to 90% by weight, based on the overall weight of the formulation.

14. The use as claimed in either of claims 12 or 13 as a flooring adhesive, carpeting adhesive, tile adhesive, wallpaper adhesive or adhesive for textiles, plastic, wood or metal.

15. An aqueous adhesive formulation obtainable by mixing at least one pulverulent adhesive as claimed in any of claims 1 to 11 with water.

16. An aqueous adhesive formulation as claimed in claim 15 with a pH of more than 6, preferably more than 7 and, with particular preference, more than 8.

## Revendications

1. Adhésif en poudre, contenant
a) de 5,0 à 98,9 % en poids d'une poudre polymère redispersible, qui peut être obtenue par copolymérisation radicalaire d'un mélange M qui contient de 50 à 99,9 % en poids d'au moins un monomère à insaturation éthylénique et de 0,1 à 15 % en poids d'au moins un comonomère soluble dans l'eau et contenant des groupes acide, pour donner un polymère P ayant une température de transition vitreuse ≤ 20°C, par le procédé de polymérisation radicalaire en émulsion aqueuse en présence d'au moins un amidon saccharifié ayant une masse moléculaire moyenne en masse de 2500 à 25 000 servant de colloïde protecteur, et éventuellement d'autres additifs, avec obtention d'une dispersion aqueuse de polymères, et séchage de la dispersion par atomisation à un pH de 1 à 7,
b) de 1 à 94,9 % en poids d'au moins une matière de charge,
c) de 0,1 à 10 % en poids d'au moins un additif alcalin,
d) de 0 à 10 % en poids d'au moins un émulsifiant,
e) de 0 à 30 % en poids d'autres additifs.

2. Adhésif selon la revendication 1, contenant :
de 15 à 70 % en poids, de préférence de 30 à 60 % en poids, de la poudre polymère redispersible a) et
de 30 à 85 % en poids de la matière de charge b).

3. Adhésif selon l'une des revendications 1 ou 2, dans lequel le mélange M contient de 60 à 99 % en poids d'au moins un monomère à insaturation éthylénique et polymérisable par polymérisation radicalaire et de 1 à 10 % en poids d'au moins un comonomère soluble dans l'eau et contenant des groupes acide.

4. Adhésif selon l'une des revendications 1 à 3, dans lequel le monomère à insaturation éthylénique est choisi parmi les monooléfines, les composés vinylaromatiques, les halogénures de vinyle, les halogénures de vinylidène, les esters d'alcools vinyliques et d'acides monocarboxyliques, les esters d'acides mono- et dicarboxyliques à insaturation α,β, les nitriles à insaturation α,β-éthylénique, les hydrocarbures non aromatiques ayant au moins deux doubles liaisons oléfiniques, et/ou leurs mélanges.

5. Adhésif selon l'une des revendications 1 à 4, dans lequel le mélange M contient en tant que comonomère au moins un acide mono- et/ou dicarboxylique à insaturation α,β-monoéthylénique, choisi parmi l'acide acrylique, l'acide méthacrylique, l'acide maléique, l'acide fumarique, l'acide itaconique et/ou l'acide crotonique.

6. Adhésif selon l'une des revendications 1 à 5, dans lequel le monomère à insaturation éthylénique du mélange M est choisi parmi le styrène, l'α-méthylstyrène, l'o-chlorostyrène, le vinyltoluylène, le chlorure de vinyle, le chlorure de vinylidène, les esters de l'acide acrylique et/ou de l'acide méthacrylique avec le méthanol, l'éthanol, le n-propanol, l'isopropanol, le n-butanol, l'isobutanol et le 2-éthylhexanol, l'acétate de vinyle, l'éthylène, le 1,3-butadiène, l'isoprène et leurs mélanges, de préférence parmi le styrène, le méthacrylate de méthyle, l'acrylate d'éthyle, l'acrylate de 2-éthylhexyle, l'acrylate de butyle et leurs mélanges.

7. Adhésif selon l'une des revendications 1 à 6, dans lequel l'acide mono- et/ou dicarboxylique à insaturation α,β-monoéthylénique du mélange M est l'acide acrylique, l'acide méthacrylique ou un de leurs mélanges.

8. Adhésif selon la revendication 1, dans lequel le mélange M est polymérisé en présence de 5 à 40 % en poids, de préférence de 10 à 30 % en poids, en particulier de 15 à 25 % en poids d'au moins un produit de dégradation de l'amidon, par rapport à la quantité de monomères polymérisés.

9. Adhésif selon l'une des revendications 1 à 8, dans lequel la température de transition vitreuse du polymère P est ≤ 0°C, de préférence ≤ -10°C, en particulier ≤ -20°C, et spécialement ≤ -30°C.

10. Adhésif selon l'une des revendications 1 à 9, dans lequel la matière de charge b) est choisie parmi la craie, la calcite, la dolomite, la poudre de quartz, le dioxyde de titane, le silicate d'aluminium, le talc, le mica, le kieselguhr, le gypse, la magnésite, la poudre de schiste, le sulfate de baryum, les polymères durs ou leurs mélanges.

11. Adhésif selon l'une des revendications 1 à 10, dans lequel l'additif alcalin c) est choisi parmi les hydroxydes de métaux alcalins, les hydroxydes de métaux alcalino-terreux, les oxydes de métaux alcalino-terreux, les carbonates de métaux alcalins, les hydrogénocarbonates de métaux alcalins, les silicates et leurs mélanges.

12. Utilisation des adhésifs en poudre selon l'une des revendications 1 à 11 dans des formulations aqueuses d'adhésifs.

13. Utilisation selon la revendication 12, pour laquelle la teneur en extrait sec des formulations aqueuses est de 40 à 99 % en poids, de préférence de 40 à 95 % en poids, en particulier de 50 à 90 % en poids par rapport au poids total de la formulation.

14. Utilisation selon l'une des revendications 12 ou 13, en tant qu'adhésif pour plancher, adhésif pour moquette, adhésif pour carreaux de sol, adhésif pour papier peint ou adhésif pour textiles, plastiques, bois et métaux.

15. Formulation aqueuse d'adhésif pouvant être obtenu par mélange d'au moins un adhésif en poudre selon l'une des revendications 1 à 11 avec de l'eau.

16. Formulation aqueuse d'adhésif selon la revendication 15, ayant un pH supérieur à 6, de préférence supérieur à 7, en particulier supérieur à 8.
